# FASCICULE DE BREVET EUROPEEN

(11) **EP 2 307 624 B1**
(45) Date de publication et mention de la délivrance du brevet: **21.11.2012**
(21) Numéro de dépôt: 09772713.5
(22) Date de dépôt: 09.06.2009
(51) Int. Cl.: E03F 7/00, E03F 5/10, F16K 31/22, E03D 1/16, E02B 13/00, C02F 3/00

(54) **CHASSE POUR BACHEE A OUVERTURE AUTOMATIQUE ET RAPIDE**
AUTOMATISCHES UND SICH SCHNELL ÖFFNENDES SYSTEM FÜR VOLLTANKABLASS
AUTOMATIC AND RAPID OPENING FLUSH SYSTEM FOR FULL-TANK DISCHARGE

(30) Priorité: 10.06.2008 FR 0853854
(43) Date de publication de la demande: 13.04.2011
(73) Titulaire: Aqua SAF, 73370 La Chapelle du Mont du Chat (FR)
(72) Inventeur: ESSER, Dirk, F-73370 La Chapelle du Mont du Chat (FR); STANCO, Maria, F-75002 Paris (FR); MONTEIL, Michael, F-38300 Ruy (FR); GUIRAUD, Julien, F-69530 Brignais (FR); RICOL, Vincent, F-69321 Lyon Cedex 05 (FR)
(74) Mandataire: Starck-Loudes, Anne-Caroline
(86) Numéro de dépôt international: PCT/FR2009/051087
(87) Numéro de publication internationale: WO 2010/001031

(56) Documents cités:
- WO-A1-2004/027175
- FR-A- 523 281
- FR-A1- 2 914 660

## Description

La présente invention concerne de façon générale le traitement des eaux usées, et en particulier les systèmes de traitement et d'épuration des eaux usées par cultures fixés sur support fin.

Le traitement et l'épuration des eaux usées par des milieux biologiques fixés sur un support fin connaissent aujourd'hui un développement important. Une telle épuration est généralement basée sur une filtration mécanique, une adsorption chimique et une dégradation microbiologique et biochimique par traversées de filtres comprenant des massifs de sable et des graviers. Par leur propre métabolisme, des micro-organismes et bactéries présents dans ces massifs permettent de transformer les molécules organiques ou minérales présentes dans les eaux usées. Avantageusement, les massifs sont plantés de roseaux, car la présence des roseaux permet de maintenir un milieu favorable à l'activité biologique et au développement des micro-organismes épurateurs ainsi que de prévenir le colmatage des massifs. Un tel procédé d'épuration présente en pratique une vitesse de réaction compatible avec des écoulements d'eaux domestiques ou de petites collectivités, avec un rendement d'épuration conforme aux normes en vigueur.

Selon un système d'épuration connu et destiné plus particulièrement aux petites collectivités, des eaux usées non décantées sont déversées dans un premier filtre formé d'un milieu biologique d'épuration. Ce premier filtre comprend habituellement des roseaux implantés dans un lit de gravier fin. Un dispositif de réservoir à siphon auto-amorçant, tel que celui décrit dans la demande de brevet FR-2 690 955 récupère en continu l'eau épurée par le milieu biologique. Le réservoir est vidangé automatiquement et séquentiellement vers un second filtre, également formé de roseaux implantés dans un lit de gravier et de sable. Le deuxième filtre est ainsi alimenté de façon homogène et en quantité suffisante, de sorte que le processus d'épuration par le deuxième filtre est optimisé.

Selon un autre système d'épuration connu et destiné plus particulièrement aux particuliers, des eaux usées sont pompées après passage dans une fosse septique toutes eaux et déversées dans un filtre formé d'un milieu biologique d'épuration. Ce filtre comprend habituellement des roseaux implantés dans un lit de gravier et de sable. Un tel dispositif a par exemple fait l'objet d'une demande de brevet EP1 674 430 déposée par la société EPUR NATURE.

FR 523 281 décrit un appareil à chasses d'eau intermittente comprenant de bas en haut 1° un obturateur annulaire, un flotteur de sustentation, un flotteur d'équilibre, un flotteur de soulèvement d'un plus grand diamètre que celui de l'obturateur, 2° une cheminée centrale, 3° un guidage pour l'appareil flotteur-obturateur, et 4° une cuvette disposée au fond d'un réservoir dans lequel l'air arrive constamment cette cuvette étant munie d'un siège pour l'obturateur et d'un tuyau de chasse à la partie inférieure.

La demande de brevet WO 2004/027175 décrit un dispositif de chasse pour l'évacuation d'eaux usées comprenant les caractéristiques de la préambule de le revendication 1. Ce dispositif de chasse comprend un réservoir et un bouchon de sortie mobile verticalement entre une position basse permettant l'accumulation du liquide dans le réservoir, et une position haute permettant son évacuation.

L'invention vise à améliorer les dispositifs connus en ce que le bouchon dégage même quand le débit d'eau entrant dans le réservoir est faible, tout en garantissant des vidanges séquentielles a la sortie. L'invention concerne ainsi un dispositif de chasse destiné à évacuer des eaux usées par bâchées, comprenant :
- un réservoir présentant une conduite de sortie et un siège d'étanchéité entourant cette conduite :
- un bouchon flotteur comprenant :
- une face supérieure destinée à être immergée dans les eaux usées ;
- une face inférieure à l'aplomb dudit siège ;
- un élément en saillie par rapport à la face inférieure, le bouchon étant mobile verticalement dans le réservoir entre une première position où la face inférieure est en contact avec le siège et où la saillie est logée
   dans la conduite de sortie, le siège présentant un chanfrein ménagé dans la partie destinée à venir en contact avec la face inférieure du bouchon, et une deuxième position où la face inférieure est écartée du siège ;
- un organe flotteur mobile verticalement dans le réservoir, entraînant le bouchon au-delà d'un niveau prédéfini d'eaux usées au-dessus de la face supérieure. Le chanfrein permet la création d'un espace entre le siège et la face inférieur du bouchon flotteur qui se remplisse rapidement d'eaux usées lorsque l'organe flotteur commence à entraîner le bouchon flotteur et que la saillie est encore logée dans la conduite de sortie.

Selon une variante, l'organe flotteur est fixé au bouchon au-dessus de sa face supérieure.

Selon encore une variante, l'organe flotteur est connecté au bouchon par l'intermédiaire d'un ressort et est maintenu au-dessus de la face supérieure du bouchon.

Selon une autre variante préférée, l'élément en saillie n'est plus logé dans la conduite dans la deuxième position.

Selon encore une autre variante, l'élément en saillie présente une longueur comprise entre 30 et 60 mm logée dans la conduite de sortie dans la première position du bouchon.

Selon encore une variante, l'élément en saillie comprend un jeu radial compris entre 1 et 5 mm par rapport à la paroi de la conduite.

Selon une autre variante, l'élément en saillie présente une extrémité inférieure chanfreinée et dans lequel une jonction entre le siège et la conduite de sortie est chanfreinée.

Selon encore une autre variante, la face inférieure du bouchon est munie d'un joint entourant l'élément en saillie et disposé en contact avec le siège dans la première position du bouchon.

Selon une autre variante, le bouchon comprend une couronne entourant l'élément en saillie et dans laquelle la face inférieure est ménagée.

Selon encore une variante avantageuse, le siège présente un chanfrein ménagé dans la partie destinée à venir en contact avec la face inférieure du bouchon.

Selon encore une autre variante, l'organe flotteur et le bouchon sont configurés pour que le bouchon soit entraîné verticalement à partir d'un niveau d'eaux usées compris entre 150 et 800 mm au-dessus du siège.

Selon une autre variante, le bouchon flotteur est dimensionné pour assurer la flottabilité de l'ensemble comprenant le bouchon et l'organe flotteur lorsqu'il est immergé.

Selon une variante, la conduite de sortie présente une section circulaire d'un diamètre compris entre 80 et 315 mm.

Selon encore une autre variante, le dispositif comprend une conduite d'appel d'air s'étendant entre la face inférieure du bouchon et un point situé au-dessus dudit niveau prédéfini au-dessus du siège.

Selon encore une variante, la conduite d'appel d'air s'étend entre une face inférieure de l'élément en saillie et un point situé au-dessus dudit niveau prédéfini au-dessus du siège.

Selon encore une autre variante, le réservoir comprend une paroi périphérique de forme cylindrique réalisée en béton, en fibre de verre (polyester armé par exemple), en PVC ou en polyéthylène.

Selon une variante, le dispositif comprend en outre une poignée solidaire de l'ensemble comprenant l'organe flotteur et le bouchon, cet ensemble étant monté coulissant dans le réservoir de sorte qu'une simple traction verticale sur la poignée permette de l'extraire du réservoir.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un dispositif d'épuration d'eaux usées mettant en oeuvre une chasse selon l'invention ;
- les figures 2 et 3 sont respectivement des vues en coupe et de dessus d'une chasse selon un mode de réalisation de l'invention ;
- la figure 4 est une vue en coupe d'un exemple de bouchon flotteur ;
- la figure 5 est une vue en coupe d'un détail d'une variante de bouchon flotteur ;
- les figures 6 à 14 sont des vues en coupe de la chasse des figures 2 à 3 durant différentes phases de fonctionnement ;
- la figure 15 est une vue en coupe d'une variante de moyens de guidage d'un organe flotteur ;
- les figures 16 et 17 représentent des solutions pour le montage de conduites de sortie de différents diamètres ;
- la figure 18 est une représentation schématique d'un dispositif d'épuration d'eaux usées mettant en oeuvre une variante de chasse selon l'invention ;
- la figure 19 est une vue en coupe d'une chasse selon cette variante ;
- la figure 20 est une vue en coupe d'un manchon de maintien de niveau d'eau pour la chasse de la figure 19 ;
- la figure 21 est une vue en coupe du fond du réservoir de la chasse de la figure 19.

Le présent texte décrit une chasse pour évacuer des eaux usées par bâchées séquentielles. La chasse présente un siège d'étanchéité dans le fond d'un réservoir. Ce siège est raccordé à une conduite de sortie d'eau. La chasse présente de plus un bouchon flotteur muni d'une face inférieure à l'aplomb du siège et d'un élément en saillie depuis cette face inférieure. Le bouchon est mobile entre une première position où sa face inférieure est en contact avec le siège et où la saillie est logée dans la conduite de sortie, et une deuxième position où la face inférieure est écartée du siège, et où, de préférence, la saillie n'est avantageusement plus logée dans la conduite de sortie. La chasse présente de plus un organe flotteur mobile entraînant le bouchon flotteur lorsque que le niveau d'eau dans le réservoir au-dessus du siège dépasse un seuil.

L'invention permet de générer automatiquement des évacuations d'eau par bâchées au moyen d'une chasse de structure très simple. La chasse est actionnée uniquement par les forces hydrauliques du fluide qui y est déversé. La chasse ne fait notamment pas appel à des commandes mécaniques ou électromagnétiques. Une telle chasse nécessite donc une maintenance particulièrement limitée. De plus, la combinaison de l'organe flotteur et de la forme du bouchon permet de réaliser une ouverture franche du bouchon au-delà d'un niveau d'eau souhaité.

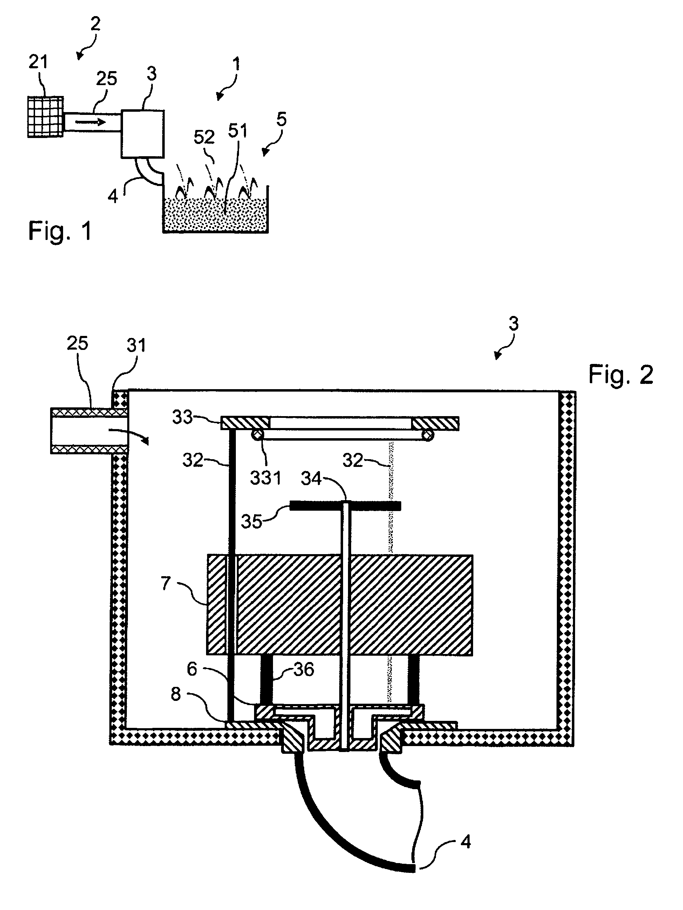

La figure 1 représente schématiquement un dispositif d'épuration 1 d'eaux usées pour une installation non collective. Ce dispositif d'épuration 1 comprend une première variante de chasse d'évacuation par bâchées selon l'invention.

Le dispositif 1 comprend une fosse septique toutes eaux 21. Une canalisation 25 est connectée à la sortie de la fosse septique 21 et déverse les eaux usées dans une chasse 3. La chasse 3 déverse des eaux usées par bâchées successives dans un filtre 5 par l'intermédiaire d'une canalisation de sortie 4. Le filtre 5 comprend un milieu de filtration 51 dans lequel des végétaux 52 sont plantés. Les végétaux 52, tels que des roseaux, sont enracinés dans le milieu de filtration 51, typiquement un lit de sable. Ces végétaux 52 sont destinés à favoriser le développement d'une flore microbienne permettant d'absorber et de dégrader des résidus polluants contenus dans l'eau. Du fait de cette absorption et du filtrage dans le milieu de filtration 51, l'eau est progressivement épurée, puis collectée dans des tuyaux de drainage non illustrés.

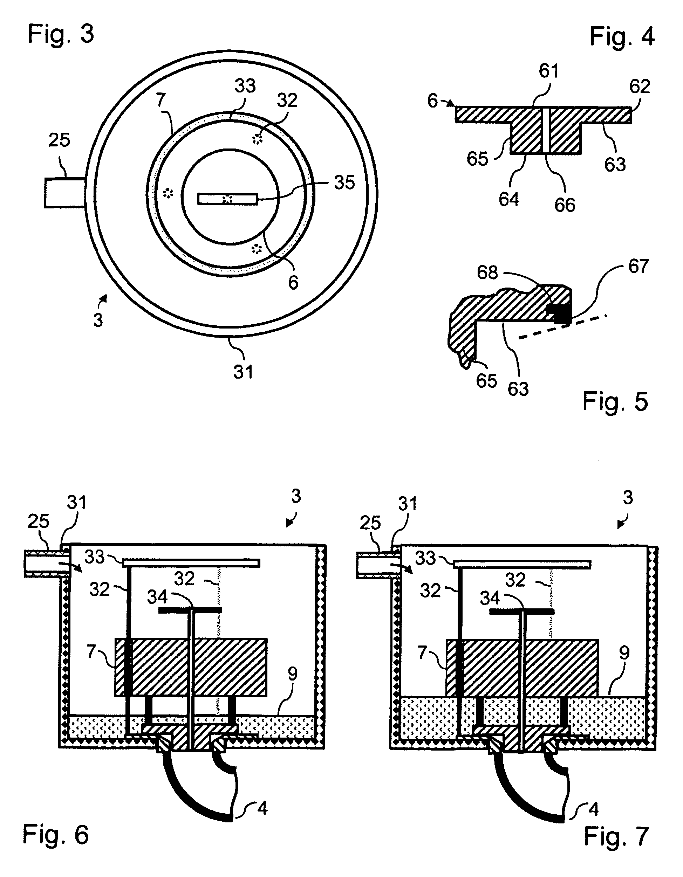

Les figures 2 et 3 représentent plus précisément une chasse 3 à vide. La chasse 3 comprend un réservoir 31, présentant typiquement une forme cylindrique. Une ou plusieurs canalisations 25 d'arrivée d'eaux usées débouchent dans la partie supérieure du réservoir 31. Un orifice de sortie est ménagé dans le fond du réservoir 31. Un siège d'étanchéité rapporté 8 est plaqué dans le fond du réservoir 31. L'orifice de sortie du réservoir 31 est ménagé dans la partie médiane du siège 8. Une canalisation de sortie 4 est raccordée au siège 8 et communique avec l'orifice de sortie. La canalisation de sortie 4 est destinée à évacuer l'eau du réservoir 31. La partie médiane du siège 8 et la canalisation 4 forment ainsi une conduite de sortie des eaux usées.

La chasse 3 comprend également un bouchon flotteur 6, dont un exemple est détaillé plus précisément à la figure 4. Le bouchon flotteur 6 est muni d'une face supérieure 61 destinée à être immergée dans les eaux usées. Le bouchon 6 présente une face inférieure 63 placée à l'aplomb du siège 8. Les faces 61 et 63 sont distantes d'une épaisseur donnée formant ainsi une couronne 62. Le bouchon 6 comprend de plus un élément 65 en saillie vers le bas par rapport à la face inférieure 63. L'élément en saillie 65 est entouré par la couronne 62.

Le bouchon 6 est monté mobile verticalement dans le réservoir 31. Dans la position illustrée, la face inférieure 63 est, au moins partiellement (voir figures 2, 5-8, 14 par exemple), en contact avec le siège 8 et l'élément en saillie 65 est logé dans la conduite de sortie. Le bouchon 6 est mobile verticalement de sorte que sa face inférieure 63 peut s'écarter du siège. Le bouchon 6 présente une flottabilité positive lorsqu'il est totalement immergé dans l'eau.

La chasse 3 comprend de plus un organe flotteur 7 mobile verticalement dans le réservoir et entraînant le bouchon 6 au-delà d'un niveau prédéfini d'eaux usées au-dessus de la face supérieure 61. L'organe flotteur 7 présente une flottabilité positive lorsqu'il est immergé dans l'eau.

Grâce à cette structure, le bouchon 6 sera maintenu plaqué contre le siège 8 et obstruera l'orifice de sortie jusqu'à un certain niveau d'eau dans le réservoir 31. Le bouchon 6 sera notamment maintenu par son poids propre, et par le poids de la colonne d'eau sur sa face supérieure 61. Lorsque l'organe flotteur 7 entraînera le bouchon 6, de l'eau s'engouffrera entre le siège 8 et la face inférieure 63. Le siège 8 présente un chanfrein ménagé dans la partie destinée à venir en contact avec la face inférieure 63 du bouchon (en d'autres termes, dans la partie destinée à créer un contact étanche avec ladite face inférieure 63). Il ressort clairement des figures 2, 5-8 et 14 par exemple, que le contact entre le siège 8 et la face inférieure 63, pour être étanche, ne doit pas nécessairement impliquer l'ensemble de la surface du siège 8 et l'ensemble de la face inférieure 63. Du fait de la présence de l'élément en saillie 65 dans la conduite de sortie, le débit d'eau de sortie sera initialement limité. L'eau présente exerce alors un effort vers le haut sur la face inférieure 63 établissant une poussée d'Archimède sur la partie du bouchon située au droit de cette face 63, ce qui aboutit à une montée d'autant plus rapide du bouchon 6 que le siège présente un chanfrein, ménagé dans la partie destinée à venir en contact avec la face inférieure 63 du bouchon 6, créant un espace, entre ledit siège et ladite face inférieure 63, se remplissant rapidement d'eaux usées lorsque le flotteur 7 commence à entraîner le bouchon 6 et que la saillie est encore logée dans la conduite de sortie. Cet espace correspond à un volume généralement vide en première position (position fermée), i.e., lorsque la saillie est logée dans la conduite de sortie et que la face inférieure du bouchon 6 est en contact, au moins partiel, avec le siège.

Avantageusement, le réservoir 31 est réalisé sous forme d'une pièce synthétique, par exemple en polyéthylène. Le réservoir 31 pourra être disposé dans une cavité réalisée dans la terre.

Avantageusement, comme illustré, l'organe flotteur 7 est fixé au bouchon 6 au-dessus de sa face supérieure 61. Ainsi, avant que l'eau 9 n'atteigne l'organe flotteur 7, le poids propre de l'organe flotteur 7 plaque également la face inférieure 63 contre le siège 8 ou, en d'autres termes, permet qu'un contact étanche s'établisse entre ladite face inférieure 63 et ledit siège 8 (comme illustré, par exemple, sur les figures 2, 5-8, 14). La qualité de la fermeture est ainsi améliorée lorsque le bouchon est dans la première position. De plus, le poids de l'organe flotteur 7 accélère alors la fermeture du bouchon 6 lorsque la majeure partie de l'eau présente dans le réservoir 31 a été évacuée. L'organe flotteur 7 est fixé sur le bouchon 6 au moyen d'arbres 36. On pourrait également envisager que l'organe flotteur 7 soit connecté au bouchon 6 par l'intermédiaire d'un ou plusieurs ressorts le maintenant au-dessus de la face supérieure 61. Ainsi, lorsque les eaux atteignent l'organe 7, le ou les ressorts emmagasinent de l'énergie pour accélérer ensuite la séparation entre la face inférieure 63 et le siège 8. Des ressorts peuvent notamment permettre de diminuer le volume nécessaire pour le bouchon 6.

Avantageusement, la chasse 3 est munie de trois arbres 32 guidant l'organe flotteur 7 en coulissement selon la direction verticale. Les arbres 32 traversent trois alésages ménagés dans l'organe flotteur 7. L'extrémité supérieure de chaque arbre 32 est logée dans un alésage borgne ménagé dans une platine 33. La platine 33 repose ainsi sur l'extrémité supérieure des arbres 32, ce qui permet d'éviter l'utilisation d'organes de fixation qui pourraient chuter dans le fond du réservoir 31. La platine permet de maintenir l'entraxe des arbres 32. Les arbres 32 sont fixés par leur extrémité inférieure au siège 8. Les arbres 32 sont répartis autour du bouchon flotteur 6.

Avantageusement, un amortisseur 331 est fixé sous la platine 33. Cet amortisseur 331 est typiquement réalisé sous forme d'anneau en caoutchouc. L'amortisseur 331 permet d'éviter une détérioration de l'organe flotteur 7 lors d'une éventuelle remontée trop rapide de celui-ci.

Afin d'améliorer l'évacuation des eaux par la canalisation 4, une conduite d'appel d'air 34 s'étend entre l'extrémité inférieure 64 de l'élément en saillie 65 et un point au-dessus de l'extrémité supérieure de l'organe flotteur 7. Ainsi, lors de la fermeture du bouchon 6, de l'air pourra parvenir jusqu'à la canalisation 4 et ainsi limiter la dépression à l'arrière de l'écoulement d'eau. La fermeture du bouchon 6 est ainsi facilitée. La conduite 34 s'étendant au-dessus de l'extrémité supérieure de l'organe flotteur 7, il ne risque ainsi pas d'être traversé par des eaux usées du réservoir 31. La conduite 34 traverse un alésage 66 joignant la face supérieure 61 et l'extrémité inférieure 64 de l'élément en saillie 65.

Avantageusement, une poignée 35 est solidaire de l'ensemble comprenant l'organe flotteur 7 et le bouchon 6. La poignée 35 est destinée à extraire l'organe flotteur 7 et le bouchon 6 du réservoir 31 par une simple traction verticale, afin de faciliter l'entretien de la chasse 3. La poignée 35 est en l'occurrence solidaire de la partie supérieure de la conduite 34.

Avantageusement, la face inférieure 63 du bouchon 6 est munie d'un joint 67 disposé à la périphérie du bouchon 6 et entourant l'élément 65 comme illustré à la figure 5. Le joint 67 est maintenu en position dans une gorge 68. Le joint 67 est avantageusement un joint à embrèvement. Dans la première position du bouchon 6 qui correspond à une position de fermeture, le joint 67 est en contact avec le siège 8. Le trait discontinu illustré à la figure 5 représente une surface chanfreinée du siège 8 destinée à venir en contact avec le joint 67. La surface chanfreinée améliore ainsi l'étanchéité de contact du joint 67. Elle permet en outre la création d'un espace, comme expliqué précédemment, entre ledit siège 8 et ladite face inférieure 63, se remplissant rapidement d'eaux lorsque le flotteur 7 commence à entraîner le bouchon 6 et que la saillie est encore logée dans la conduite de sortie. Une surface chanfreinée sans aspérités permet, de plus, d'évacuer plus facilement des débris ou un film bactérien se formant sur le siège 8, durant l'évacuation d'une bâchée. L'angle du chanfrein est typiquement compris entre 5 et 30°.

Les figures 6 à 14 représentent différentes étapes de fonctionnement de la chasse 3 durant le remplissage du réservoir 31.

Préalablement à la première phase, de l'eau pourra être éventuellement déjà présente dans le réservoir 31 à l'issue d'une bâchée précédente.

Lors de la première phase illustrée à la figure 6, le réservoir 31 se remplit d'eau et le niveau de cette eau est au-dessus de la face supérieure 61 du bouchon 6 et en dessous de l'extrémité inférieure de l'organe flotteur 7. Le poids propre du bouchon 6, le poids de l'organe flotteur 7 et le poids de la colonne d'eau au-dessus de la face 61 maintiennent la face inférieure 63 en contact avec le siège 8. L'élément 65 étant entouré par la face 63, il est isolé de l'eau 9 du réservoir 31 par le contact étanche entre cette face 63 et le siège 8. La canalisation 4 contenant de l'air en contact avec l'élément en saillie 65 et la face inférieure 63, le bouchon 6 n'est pas soumis à une poussée d'Archimède orientée vers le haut. Ainsi, même si l'ensemble bouchon/organe flotteur a intrinsèquement une flottabilité positive, le bouchon 6 est tout de même maintenu en position de fermeture.

La figure 7 représente une deuxième phase durant laquelle l'eau atteint l'organe flotteur 7. À compter de cette phase, l'organe flotteur 7 subit une poussée vers le haut exercée par les eaux usées 9 présentes dans le réservoir 31. Le bouchon 6 est encore maintenu plaqué contre le siège 8 par son poids propre, par la colonne d'eau sur la face supérieure 61 et par le poids de l'organe flotteur 7.

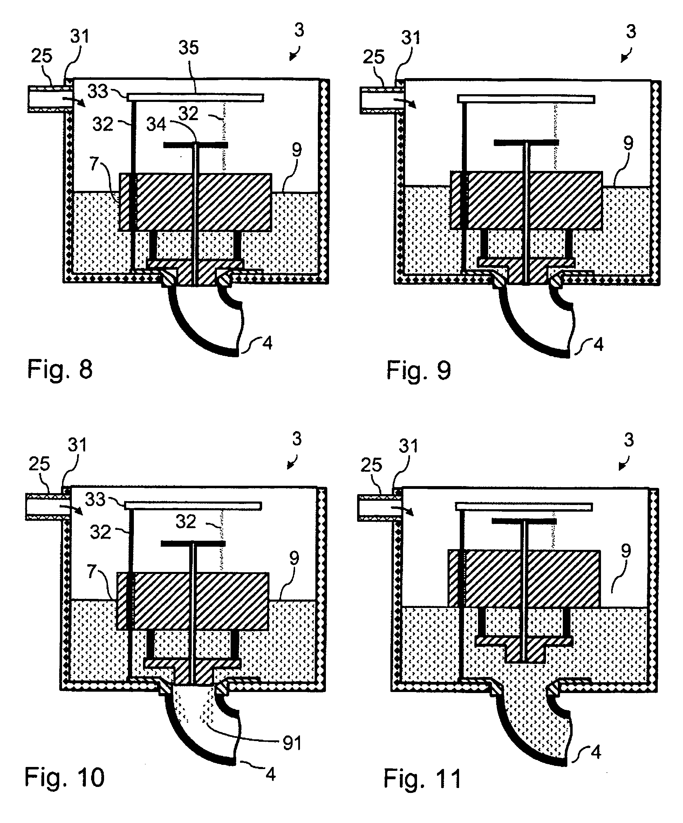

La figure 8 représente une troisième phase durant laquelle l'eau 9 atteint un seuil à partir duquel la poussée d'Archimède sur l'organe flotteur 7 s'équilibre avec le poids de l'organe 7, le poids du bouchon 6 et le poids de la colonne d'eau sur la face supérieure 61. Cette hauteur d'eau constitue le seuil d'ouverture du bouchon 6.

La figure 9 illustre une quatrième phase durant laquelle l'eau 9 est montée au-delà du seuil d'ouverture du bouchon 6. La poussée d'Archimède sur l'organe flotteur 7 devenant supérieure au poids de la colonne d'eau sur la face supérieure 61, au poids du bouchon 6 et au poids de l'organe 7, ce flotteur 7 monte et entraîne le bouchon 6 dont la face inférieure 63 en contact avec le siège 8 s'écarte dudit siège 8. Ainsi, de l'eau vient s'insinuer contre la face inférieure 63 et exerce dessus une poussée vers le haut d'autant plus forte que le siège 8 présente une surface chanfreinée, comme expliqué précédemment. L'élément en saillie 65 étant présent dans la conduite de sortie et obturant la majeure partie de sa section, l'évacuation de cette eau est limitée. Ainsi, la poussée de l'eau 9 sur la face inférieure 63 est maintenue établissant une première poussée d'Archimède. La remontée du bouchon 6 est ainsi accélérée.

La figure 10 illustre une cinquième phase durant laquelle l'eau 9 commence à s'écouler sous forme de ruissellements 91 dans la canalisation 4. L'extrémité inférieure 64 de la saillie 65 n'est pas encore immergée. Les efforts vers le haut exercés sur l'ensemble organe flotteur 7 et bouchon 6 restant supérieurs aux efforts vers le bas exercés sur ce même ensemble, cet ensemble poursuit sa remontée par rapport au niveau des eaux 9.

La figure 11 illustre une sixième phase durant laquelle le bouchon 6 est intégralement immergé, la canalisation 4 étant remplie d'eau et l'extrémité 64 étant intégralement en contact avec l'eau du réservoir 31. Ainsi, l'extrémité 64 subit également une pression d'eau vers le haut, établissant une deuxième poussée d'Archimède s'appliquant sur la partie du bouchon 6 située au droit de cette extrémité 64, ce qui accélère le mouvement de montée de l'ensemble bouchon/organe flotteur par rapport au niveau des eaux 9. Dans la position illustrée, l'organe flotteur 7 atteint une position où il est intégralement émergé. Le débit d'eau entrant étant nettement plus faible que le débit d'eau sortant, le niveau des eaux 9 dans le réservoir 31 baisse.

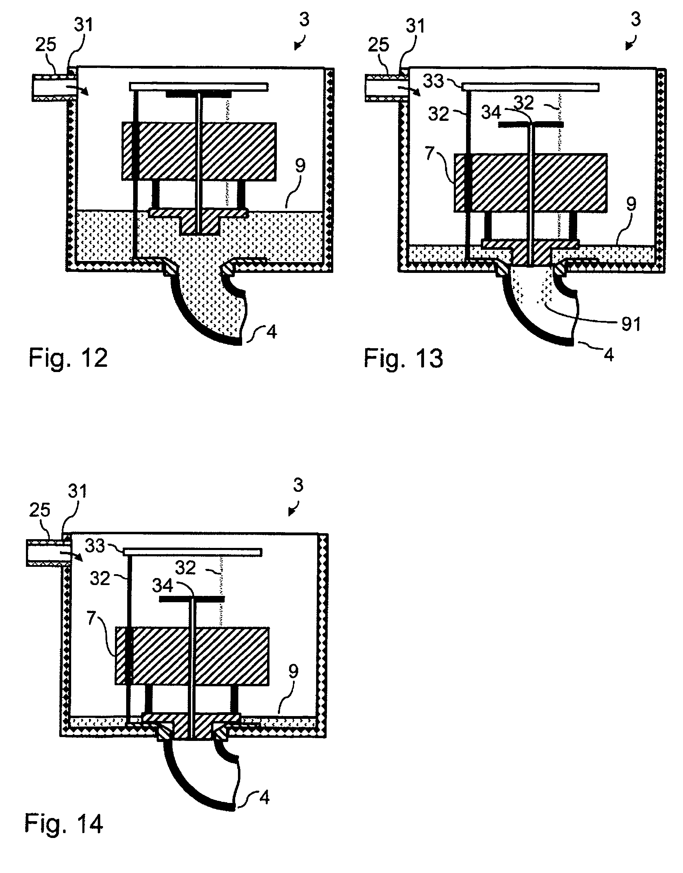

La figure 12 illustre une septième phase durant laquelle le bouchon 6 atteint un équilibre de flottaison (l'eau n'atteignant plus l'organe flotteur). Le bouchon 6 est en effet avantageusement dimensionné pour que sa seule immersion garantisse la flottabilité positive dans l'eau de l'ensemble comprenant le bouchon 6 et l'organe flotteur 7. L'ensemble bouchon/organe flotteur suit donc le niveau des eaux 9. Ainsi, le niveau d'eau résiduel dans le réservoir 31 sera réduit lors de la fermeture du bouchon 6. Avantageusement, ce dimensionnement sera effectué avec une marge de sécurité permettant de maintenir la flottaison même en présence de dépôts adhérents au flotteur 7 ou au bouchon 6.

La figure 13 illustre une huitième phase durant laquelle l'élément 65 commence à pénétrer dans la conduite de sortie. Dès lors, l'écoulement dans la canalisation 4 se réduit à un ruissellement 91. Ainsi, l'extrémité 64 de l'élément 65 n'est plus immergée et la poussée vers le haut correspondante disparaît. Les forces vers le bas s'exerçant sur l'ensemble bouchon/organe flotteur deviennent alors supérieures à la poussée d'Archimède sur le bouchon 6. La descente de l'ensemble bouchon/organe flotteur s'accélère donc.

La figure 14 illustre une neuvième phase durant laquelle la face inférieure 63 est à nouveau en contact avec le siège 8. Le bouchon 6 obture ainsi la conduite d'évacuation d'eau grâce au contact étanche établi entre le siège d'étanchéité et la face inférieure 63 du bouchon 6. Le bouchon 6 ayant accosté le siège 8 avec une vitesse supérieure à la vitesse de descente des eaux, un niveau d'eau résiduel restera au fond du réservoir 31.

Ainsi, avec un mécanisme simple et économique, la chasse 3 garantit des vidanges automatiques et séquentielles de son réservoir 31. Les mouvements d'ouverture et de fermeture du bouchon 6 sont d'autant plus brusques que le siège d'étanchéité 8 présente une surface chanfreinée ménagée dans la partie destinée à venir en contact avec la face inférieure du bouchon 6, comme expliqué précédemment, ce qui garantit un bon écoulement des bâchées. Le fait que l'ensemble bouchon/organe flotteur remonte à la surface libre des eaux permet de dégager durablement l'orifice de vidange au milieu du siège 8, permettant d'éviter que la chasse 3 ne fonctionne en régulation de niveau, préjudiciable à l'alimentation du filtre. En régulation de niveau, le bouchon 6 effectuerait des cycles d'ouverture/fermeture très courts empêchant une évacuation du réservoir par une bâchée, seule une petite portion du réservoir s'évacuant alors.

Le bouchon flotteur 6 sera avantageusement réalisé sous forme de parois en matériaux rigides ménageant un volume intérieur étanche et creux. Le bouchon flotteur 6 pourra notamment être réalisé en PVC, matériau qui présente une résilience, une rigidité, une résistance et une capacité à être usiné adéquates. Le bouchon flotteur 6 pourra être réalisé par moulage ou par assemblage de différents composants, tels que des disques et des cylindres. Le bouchon 6 pourra présenter une couronne 62 d'une hauteur de 30 mm et d'un diamètre de 200 mm. L'élément en saillie 65 présentera avantageusement une hauteur comprise entre 30 et 60 mm.

L'organe flotteur 7 pourra être réalisé sous forme de volume plein en matériau à faible densité, tel que du polystyrène. Afin d'accroître sa résistance, l'organe flotteur 7 pourra être recouvert intégralement ou localement d'une résine de renforcement, telle qu'une résine époxyde. L'organe flotteur 7 pourra être réalisé sous forme d'un cylindre d'une hauteur de 120 mm et d'un diamètre de 300 mm.

Le siège 8 pourra être fixé par tous moyens appropriés dans le fond du réservoir 31. Le siège 8 sera avantageusement réalisé en acier inoxydable.

L'homme du métier saura déterminer des matériaux adéquats pour les différents composants présents dans le réservoir 31, afin que ceux-ci résistent aux milieux agressifs. Des matériaux tels que l'INOX A304 ou du PEHD peuvent notamment être utilisés.

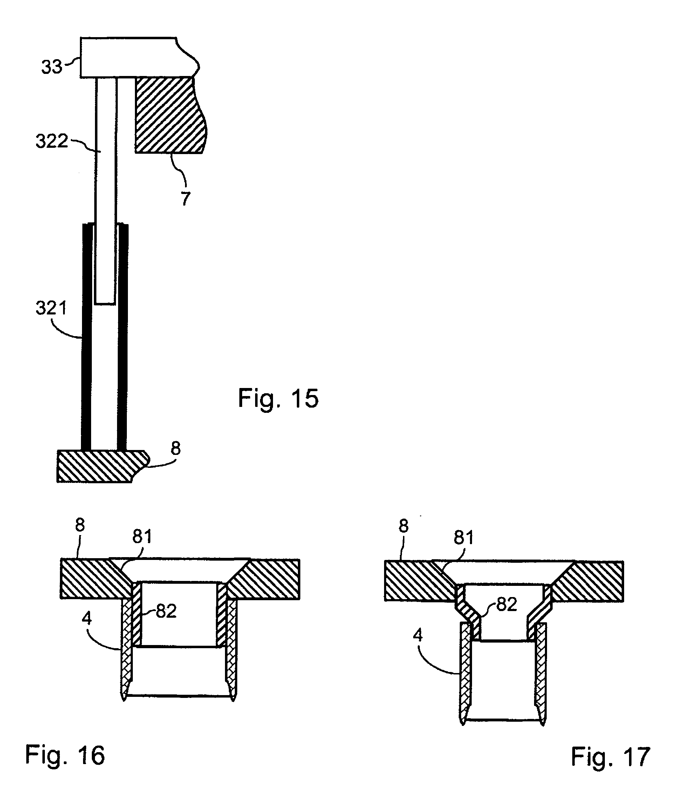

La figure 15 représente une variante de moyens de guidage en translation de l'organe flotteur 7. Dans cet exemple, le guidage de la course de l'organe flotteur 7 est assuré non pas par des arbres 32 mais par l'association d'arbres 322 coulissant dans des tubes 321. Des arbres 322 sont fixés sous la platine 33 (ici solidaire du flotteur 7) et sont insérés dans des tubes 321 fixés sur le siège 8. Le bord supérieur des tubes 321 est situé au-dessus du seuil d'ouverture du bouchon 6, de sorte que l'intérieur du tube 321 est maintenu à sec et à l'abri d'impuretés. Ainsi, le coulissement de l'organe flotteur 7 dans le réservoir 31 est assuré en nécessitant une maintenance particulièrement réduite.

Les figures 16 et 17 représentent un siège 8 raccordé à des canalisations 4 de différents diamètres. Un raccord 82 est ainsi fixé entre le siège 8 et la canalisation 4. Dans l'exemple de la figure 16, le raccord 82 a un diamètre extérieur correspondant au diamètre intérieur de la canalisation 4. Dans l'exemple de la figure 17, le raccord 82 présente un rétrécissement entre sa partie supérieure est sa partie inférieure. Sa partie inférieure présente un diamètre extérieur correspondant au diamètre intérieur de la canalisation 4. Ainsi, un même siège 8 pourra être raccordé à des canalisations 4 de différents diamètres. Avantageusement, le siège 8 présente un chanfrein 81 au niveau de sa jonction avec la conduite de sortie. Par ailleurs, l'extrémité 64 de l'élément 65 est également avantageusement chanfreinée. Ainsi, le centrage de l'élément 65 lors de son entrée dans la conduite est facilité. L'angle du chanfrein 81 est typiquement compris entre 5 et 45°.

Afin de limiter l'écoulement de l'eau entre l'élément 65 et la paroi de la conduite de sortie durant leur coulissement relatif, un jeu radial inférieur à 5 mm sera ménagé entre l'élément 65 et cette paroi. Afin de permettre le coulissement en présence d'éventuelles impuretés, ce jeu radial sera avantageusement supérieur à 1 mm.

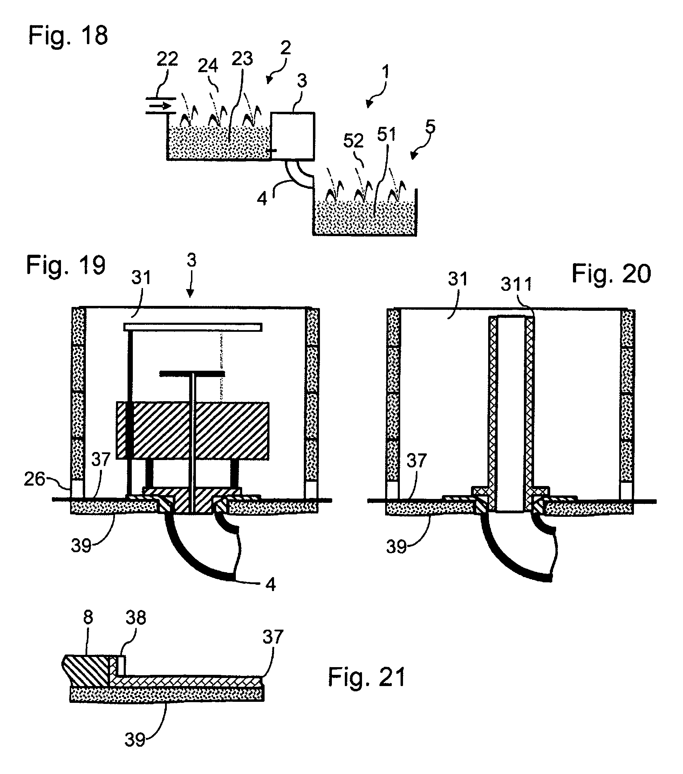

La figure 18 représente schématiquement une variante de dispositif d'épuration 1 d'eaux usées pour de petites collectivités comprenant une chasse d'évacuation par bâchées selon l'invention. Le débit d'eau nominal évacué par une telle chasse 3 sera généralement compris entre 10 et 150 mètres cubes par heure. Le dispositif 1 comprend un premier filtre 2. Le premier filtre 2 reçoit typiquement des eaux usées provenant d'un réseau d'eaux usées collectif par l'intermédiaire d'une canalisation 22. Le filtre 2 comprend un milieu de filtration 23 dans lequel des végétaux 24 sont plantés. Les végétaux 24, tels que des roseaux, sont enracinés dans le milieu de filtration 23, typiquement un lit de gravier. Le lit de gravier présente généralement une granulométrie croissant avec la profondeur : du grain fin est présent dans la partie supérieure, du grain grossier est présent dans la partie inférieure. Ces végétaux 24 sont destinés à favoriser le développement d'une flore microbienne permettant d'absorber et de dégrader des résidus polluants contenus dans l'eau. Du fait de cette absorption et du filtrage dans le milieu de filtration 23, l'eau est progressivement épurée, puis collectée dans une couche de drainage.

La couche de drainage communique avec le fond du réservoir d'une chasse d'évacuation par bâchées 3. La chasse 3 déverse des eaux usées par bâchées successives dans un second filtre 5 par l'intermédiaire d'une canalisation de sortie 4. Le second filtre 5 comprend un milieu de filtration 51 dans lequel des végétaux 52 sont plantés.

La figure 19 est une vue en coupe d'une telle chasse 3, implantée dans la continuité du filtre 2. Une bâche étanche 37 repose sur un fond stabilisé 39 réalisé typiquement en béton. La bâche 37 forme ainsi un fonds étanche pour le réservoir 31. Le fond du réservoir est avantageusement réalisé dans l'alignement du fond du premier filtre 2. La bâche 37 peut être réalisée sous forme de géomembrane rendant également le fond du filtre 2 étanche. Des ouvertures 26 sont réalisées dans la partie basse de la paroi périphérique du réservoir 31. Les eaux drainées depuis le filtre 2 pénètrent ainsi dans le réservoir 31 par ces ouvertures 26. Le niveau d'eau dans le réservoir 31 correspondra ainsi au niveau d'eau dans le filtre 2.

Les parois latérales du réservoir 31 pourront être formées de viroles standards en béton empilées, afin de réduire le coût et la durée de fabrication de la chasse 3. Les viroles pourront par exemple reposer sur des parpaings espacés pour former les ouvertures 26.

Pour que la chasse 3 présente une grande compacité et nécessite un minimum de dénivelé en l'absence de pompage entre les premier et deuxième filtres, le niveau à partir duquel l'organe flotteur 7 entraîne le bouchon 6 est avantageusement compris entre 150 et 350 mm au-dessus du siège 8.

Le bouchon flotteur 6 sera avantageusement réalisé sous forme de parois en matériaux rigides ménageant un volume intérieur étanche et creux. Le bouchon flotteur 6 pourra notamment être réalisé en PVC, ou en acier inoxydable, matériaux qui présentent une résilience, une rigidité, une résistance et une capacité à être usinés adéquates. Le bouchon flotteur 6 pourra être réalisé par moulage ou par assemblage de différents composants, tels que des disques et des cylindres. Le bouchon 6 pourra présenter une couronne 62 d'une hauteur de 30 mm et d'un diamètre de 400 mm. L'élément en saillie 65 présentera avantageusement une hauteur comprise entre 30 et 60 mm.

L'organe flotteur 7 pourra être réalisé sous forme de volume plein en matériau à faible densité, tel que du polystyrène. Afin d'accroître sa résistance, l'organe flotteur 7 pourra être recouvert intégralement ou localement d'une résine de renforcement, telle qu'une résine époxyde. L'organe flotteur 7 pourra être réalisé sous forme d'un cylindre d'une hauteur de 120 mm et d'un diamètre de 600 mm.

La canalisation 4 pourra présenter une section circulaire d'un diamètre compris entre 150 et 250 mm, garantissant un débit d'évacuation des eaux usées important. La canalisation 4 pourra par exemple présenter des valeurs de diamètres standards pour des tubes, par exemple un diamètre de 160, 200, ou 250 mm.

La figure 20 représente un manchon 311 destiné à maintenir le niveau de l'eau dans le filtre 2 durant une phase de développement des végétaux 24. L'ensemble bouchon/organe flotteur est alors remplacé par le manchon 311 obturant l'orifice d'évacuation. Lorsque l'eau atteint l'extrémité supérieure du manchon 311, celle-ci traverse le manchon 311 pour se déverser dans la conduite de sortie 4. Ainsi, le manchon 311 définit un seuil de trop-plein pour éviter un débordement d'eau dans le filtre 2.

La figure 21 représente un mode de fixation de la bâche 37 au collier de serrage 8. La bâche 37 est fixée à la périphérie du siège 8 par l'intermédiaire d'un collier de serrage 38.

L'homme du métier saura optimiser un certain nombre d'autres paramètres de dimensionnement de la chasse 3. La surface de la face supérieure 61 ne devra pas être trop importante afin de ne pas exiger un organe flotteur 7 trop volumineux pour compenser le poids de la colonne d'eau. La surface de cette face supérieure 61 devra par ailleurs être suffisamment importante pour réduire le niveau d'eau résiduel dans le réservoir 31 pour un volume donné du bouchon 6. L'organe 7 sera avantageusement dimensionné pour que son volume encore immergé lors de la cinquième phase soit supérieur au volume du bouchon 6. Ainsi, la vitesse de montée du bouchon 6 compensera la baisse du niveau de l'eau dans le réservoir 31. Le seuil de flottaison lors de l'immersion du bouchon 6 sera avantageusement situé plusieurs millimètres sous la face supérieure 61, afin de conserver une marge de sécurité durant la septième phase. La distance entre la face supérieure 61 et l'organe flotteur 7 sera également optimisée. Une distance importante favorise une ouverture brusque du bouchon 6 et permettra à la chasse 3 de ne pas fonctionner en régulation de niveau. Une distance réduite favorise la compacité de la chasse 3. Selon des simulations réalisées, cette distance sera avantageusement comprise entre 100 et 250 mm avec les valeurs de dimensionnement fournies auparavant. La hauteur de l'élément 65 sera réduite afin de limiter le niveau d'eau résiduel dans le réservoir 31.

## Revendications

1. Dispositif de chasse (3) destiné à évacuer des eaux usées par bâchées, ledit dispositif comprenant :
- un réservoir (31) présentant une conduite de sortie (4) et un siège d'étanchéité (8) entourant cette conduite ;
- un bouchon (6) flotteur comprenant :
- une face supérieure (61) destinée à être immergée dans les eaux usées ;
- une face inférieure (63) à l'aplomb dudit siège (8) ;
- un élément en saillie (65) par rapport à la face inférieure, le bouchon étant mobile verticalement dans le réservoir (31) entre une première position où la face inférieure est en contact avec le siège et où la saillie est logée dans la conduite de sortie, et une deuxième position où la face inférieure est écartée du siège et où l'élément en saillie n'est plus logé dans la conduite de sortie; et
- un organe flotteur (7) mobile verticalement dans le réservoir, entraînant le bouchon au-delà d'un niveau prédéfini d'eaux usées au-dessus de la face supérieure (61) ;
le dispositif de chasse étant **caractérisé en ce que** le siège présente un chanfrein ménagé dans la partie destinée à venir en contact avec la face inférieure du bouchon (6), ledit chanfrein dudit dispositif de chasse permettant la création d'un espace, entre le siége (8) et la face inférieure (63) du bouchons (6) flotteur, se remplissant rapidement d'eaux usées lorsque l'organe flotteur (7) commence à entraîner le bouchon (6) flotteur et que la saillie est encore logée dans la conduite de sortie (4).

2. Dispositif de chasse pour eaux usées selon la revendication 1, dans lequel l'organe flotteur (7) est fixé au bouchon au-dessus de sa face supérieure (61).

3. Dispositif de chasse pour eaux usées selon la revendication 1, dans lequel l'organe flotteur (7) est connecté au bouchon par l'intermédiaire d'un ressort et est maintenu au-dessus de la face supérieure (61) du bouchon.

4. Dispositif de chasse pour eaux usées selon l'une quelconque des revendications précédentes, dans lequel l'élément en saillie présente une longueur comprise entre 30 et 60 mm logée dans la conduite de sortie dans la première position du bouchon (6).

5. Dispositif de chasse pour eaux usées selon l'une quelconque des revendications précédentes, dans lequel l'élément en saillie (65) comprend un jeu radial compris entre 1 et 5 mm par rapport à la paroi de la conduite.

6. Dispositif de chasse pour eaux usées selon l'une quelconque des revendications précédentes, dans lequel l'élément en saillie (65) présente une extrémité inférieure (64) chanfreinée.

7. Dispositif de chasse pour eaux usées selon l'une quelconque des revendications précédentes, dans lequel la face inférieure (63) du bouchon est munie d'un joint (67) entourant l'élément en saillie (65) et disposé en contact avec le siège (8) dans la première position du bouchon.

8. Dispositif de chasse pour eaux usées selon l'une quelconque des revendications précédentes, dans lequel le bouchon comprend une couronne (62) entourant l'élément en saillie (65) et dans laquelle la face inférieure (63) est ménagée.

9. Dispositif de chasse pour eaux usées selon l'une quelconque des revendications précédentes, dans lequel l'organe flotteur et le bouchon sont configurés pour que le bouchon soit entraîné verticalement à partir d'un niveau d'eaux usées compris entre 150 et 800 mm au-dessus du siège (8).

10. Dispositif de chasse pour eaux usées selon l'une quelconque des revendications précédentes, dans lequel le bouchon flotteur (6) est dimensionné pour assurer la flottabilité de l'ensemble comprenant le bouchon et l'organe flotteur lorsqu'il est immergé.

11. Dispositif de chasse pour eaux usées selon l'une quelconque des revendications précédentes, dans lequel la conduite de sortie présente une section circulaire d'un diamètre compris entre 80 et 315 mm.

12. Dispositif de chasse pour eaux usées selon l'une quelconque des revendications précédentes, comprenant une conduite d'appel d'air (34) s'étendant entre la face inférieure (63) du bouchon et un point situé au-dessus dudit niveau prédéfini au-dessus du siège.

13. Dispositif de chasse pour eaux usées selon la revendication 12, dans lequel la conduite d'appel d'air (34) s'étend entre une extrémité inférieure (64) de l'élément en saillie (65) et un point situé au-dessus dudit niveau prédéfini au-dessus du siège.

14. Dispositif de chasse pour eaux usées selon l'une quelconque des revendications précédentes, dans lequel le réservoir (31) comprend une paroi périphérique de forme cylindrique réalisée en béton, en fibre de verre, en PVC ou en polyéthylène.

15. Dispositif de chasse pour eaux usées selon l'une quelconque des revendications précédentes, comprenant en outre une poignée (35) solidaire de l'ensemble comprenant l'organe flotteur (7) et le bouchon (6), cet ensemble étant monté coulissant dans le réservoir (31) de sorte qu'une simple traction verticale sur la poignée permette de l'extraire du réservoir.

## Claims

1. A flushing device (3) suitable to discharge waste water by tankfulls, said device including:
- a reservoir (31) exhibiting a discharge pipe (4) and a sealing seat (8) surrounding said pipe;
- a floating plug (6) including:
- an upper surface (61) suitable to be immersed in the wastewater;
- a lower surface (63) vertically above said seat (8);
- an element (65) protruding outward from the lower surface, the plug being vertically mobile within the reservoir (31) between a first position wherein the lower surface is in contact with the seat and wherein the protrusion is accommodated in the discharge pipe and a second position wherein the lower surface is separated from the seat and wherein the protruding element is not accommodated in the discharge pipe; and
- a floating member (7) vertically mobile within the reservoir, driving the floating plug when the wastewater exceeds a predefined level above the upper surface (61);
the flushing device being **characterized in that** the seat exhibits a chamfer formed in the portion suitable to come into contact with the lower surface of the plug (6), said chamfer of said flushing device allowing the creation of a space between the seat (8) and the lower face (63) of the floating plug (6), rapidly filling with wastewater when the floating member (7) begins to drive the floating plug (6) and the protrusion is still accommodated in the discharge pipe (4).

2. The flushing device for wastewater according to claim 1, wherein the floating member (7) is fixed to the plug above its upper surface (61).

3. The flushing device for wastewater according to claim 1, wherein the floating member (7) is connected to the plug through a spring and held above the upper surface (61) of the plug.

4. The flushing device for wastewater according to any one of the preceding claims, wherein the protruding element exhibits a length comprised between 30 and 60 mm accommodated in the discharge pipe in the first position of the plug (6).

5. The flushing device for wastewater according to any one of the preceding claims, wherein the protruding element (65) comprises a radial clearance comprised between 1 and 5 mm relative to the wall of the pipe.

6. The flushing device for wastewater according to any one of the preceding claims, wherein the protruding element (65) exhibits a chamfered lower end (64).

7. The flushing device for wastewater according to any one of the preceding claims, wherein the lower surface (63) of the plug is equipped with a gasket (67) surrounding the protruding element (65) and coming into contact with the seat (8) in the first position of the plug.

8. The flushing device for wastewater according to any one of the preceding claims, wherein the plug includes a crown (62) surrounding the protruding element (65) and wherein the lower surface (63) is formed.

9. The flushing device for wastewater according to any one of the preceding claims, wherein the floating member and the plug are configured so that the plug is driven vertically starting with a wastewater level comprised between 150 and 800 mm above the seat (8).

10. The flushing device for wastewater according to any one of the preceding claims, wherein the floating plug (6) is dimensioned to ensure floatability of the assembly comprising of the plug and the floating member when it is immersed.

11. The flushing device for wastewater according to any one of the preceding claims, wherein the discharge pipe exhibits a circular section with a diameter comprised between 80 and 315 mm.

12. The flushing device for wastewater according to any one of the preceding claims, comprising an air snifter (34) extending between the lower surface (63) of the plug and a point situated above said predefined level above the seat.

13. The flushing device for wastewater according to claim 12, wherein the air snifter (34) extends between a lower end (64) of the protruding element (65) and a point located above said predefined level above the seat.

14. The flushing device for wastewater according to any one of the preceding claims, wherein the reservoir (31) comprises a peripheral wall made of concrete, of glass fiber, of PVC or of polyethylene.

15. The flushing device for wastewater according to any one of the preceding claims, also comprising a knob (35) attached to the assembly comprising the floating member (7) and the plug (6), said assembly sliding within the reservoir (31) so that a simple vertical pull on the knob allows it to be withdrawn from the reservoir.

## Patentansprüche

1. Spülvorrichtung (3) zur stoßweisen Ableitung von Abwässern, wobei besagte Vorrichtung umfasst:
- einen Behälter (31), umfassend eine Auslassleitung (4) und einen Dichtsitz (8), der diese Leitung umschließt;
- einen Schwimmstopfen (6), umfassend
- eine Oberseite (61), die in die Abwässer eingetaucht sein soll;
- eine Unterseite (63), die senkrecht zu besagtem Dichtsitz (8) ausgerichtet ist;
- eine bezogen auf die Unterseite auskragende Komponente (65); wobei der Stopfen im Behälter (31) senkrecht verschiebbar ist zwischen einer ersten Position, wo die Unterseite mit dem Dichtsitz in Kontakt steht und wo die Auskragung in der Auslassleitung platziert ist, und einer zweiten Position, wo die Unterseite vom Dichtsitz entfernt ist und wo die auskragende Komponente nicht mehr in der Auslassleitung platziert ist; und
- einen Schwimmer (7), der in dem Behälter senkrecht verschiebbar ist und den Stopfen über ein zuvor definiertes Abwasser-Niveau oberhalb der Oberseite (61) zieht;
wobei die Spülvorrichtung **dadurch gekennzeichnet ist, dass** der Dichtsitz eine in dem Bereich angeordnete Schrägkante aufweist, der mit der Unterseite des Stopfens (6) in Kontakt kommen soll, wobei besagte Abschrägung der besagten Spülvorrichtung die Entstehung eines Raums zwischen dem Dichtsitz (8) und der Unterseite (63) des Schwimmstopfens (6) ermöglicht, der sich schnell mit Abwässern füllt, wenn der Schwimmer (7) beginnt, den Schwimmstopfen (6) zu ziehen, und die Auskragung noch in der Auslassleitung (4) platziert ist.

2. Spülvorrichtung für Abwässer gemäß Anspruch 1, wobei der Schwimmer (7) an dem Stopfen oberhalb seiner Oberseite (61) befestigt ist.

3. Spülvorrichtung für Abwässer gemäß Anspruch 1, wobei der Schwimmer (7) mit dem Stopfen über eine Feder verbunden ist und oberhalb der Oberseite (61) des Stopfens gehalten wird.

4. Spülvorrichtung für Abwässer gemäß einem der vorhergehenden Ansprüche, wobei die auskragende Komponente zwischen 30 und 60 mm lang ist, die in der Auslassleitung in der ersten Position des Stopfens (6) platziert ist.

5. Spülvorrichtung für Abwässer gemäß einem der vorhergehenden Ansprüche, wobei die auskragende Komponente (65) ein Radialspiel zwischen 1 und 5 mm bezogen auf die Wand der Leitung umfasst.

6. Spülvorrichtung für Abwässer gemäß einem der vorhergehenden Ansprüche, wobei die auskragende Komponente (65) ein abgeschrägtes unteres Ende (64) aufweist.

7. Spülvorrichtung für Abwässer gemäß einem der vorhergehenden Ansprüche, wobei die Unterseite (63) des Stopfens mit einer Dichtung (67) versehen ist, die die auskragende Komponente (65) umschließt und in Kontakt mit dem Dichtsitz (8) in der ersten Position des Stopfens steht.

8. Spülvorrichtung für Abwässer gemäß einem der vorhergehenden Ansprüche, wobei der Stopfen eine Krone (62) umfasst, die die auskragende Komponente (65) umschließt und die Unterseite (63) umfasst.

9. Spülvorrichtung für Abwässer gemäß einem der vorhergehenden Ansprüche, wobei der Schwimmer und der Stopfen derart gestaltet sind, damit der Stopfen ab einem Abwasser-Niveau zwischen 150 und 800 mm über dem Dichtsitz (8) senkrecht gezogen wird.

10. Spülvorrichtung für Abwässer gemäß einem der vorhergehenden Ansprüche, wobei der Schwimmstopfen (6) so bemessen ist, dass er die Schwimmfähigkeit des Gesamtaufbaus, bestehend aus Stopfen und Schwimmer, wenn er eingetaucht ist, sicherstellt.

11. Spülvorrichtung für Abwässer gemäß einem der vorhergehenden Ansprüche, wobei die Auslassleitung einen Kreisquerschnitt mit einem Durchmesser zwischen 80 und 315 mm aufweist.

12. Spülvorrichtung für Abwässer gemäß einem der vorhergehenden Ansprüche, umfassend eine Luftzuleitung (34), die sich zwischen der Unterseite (63) des Stopfens und einer Stelle erstreckt, die oberhalb besagten zuvor definierten Niveaus über dem Dichtsitz liegt.

13. Spülvorrichtung für Abwässer gemäß Anspruch 12, wobei die Luftzuleitung (34) sich zwischen einem unteren Ende (64) der auskragenden Komponente (65) und einer Stelle erstreckt, die oberhalb besagten zuvor definierten Niveaus über dem Dichtsitz liegt.

14. Spülvorrichtung für Abwässer gemäß einem der vorhergehenden Ansprüche, wobei der Behälter (31) eine zylinderförmige Ringwand umfasst, die aus Beton, Glasfaser, PVC oder Polyethylen hergestellt ist.

15. Spülvorrichtung für Abwässer gemäß einem der vorhergehenden Ansprüche, umfassend außerdem einen Griff (35), der mit dem Gesamtaufbau, umfassend Schwimmer (7) und Stopfen (6), verbunden ist, wobei dieser Gesamtaufbau in dem Behälter (31) verschiebbar montiert ist, so dass ein einfaches vertikales Ziehen an dem Griff das Herausziehen des Behälters erlaubt.
